# EUROPEAN PATENT SPECIFICATION

(11) **EP 4 484 286 B1**
(45) Date of publication and mention of the grant of the patent: **26.08.2026**
(21) Application number: 23306053.2
(22) Date of filing: 28.06.2023
(51) Int. Cl.: B64D 11/06

(54) **BASE UNIT**
BASISEINHEIT
UNITÉ DE BASE

(43) Date of publication of application: 01.01.2025
(73) Proprietor: Safran Seats, 78370 Plaisir (FR); Safran Seats GB Limited, Cwmbran NP44 3HQ (GB)
(72) Inventor: WOODINGTON, James, Cwmbran, NP44 3HQ (GB); COTTA, Gerald, 78370 Plaisir (FR)
(74) Representative: Abel & Imray LLP

(56) References cited:
- US-A1- 2003 222 174
- US-A1- 2018 148 176
- US-A1- 2021 114 735
- US-A1- 2021 229 813
- US-B2- 11 161 614

## Description

### Field of the Invention

The present invention concerns a base unit for an aircraft seat unit. More particularly, but not exclusively, this invention concerns a base unit for an aircraft seat unit that provides useful storage space.

### Background of the Invention

Typically, aircraft seat units, and in particular business class and first class seat units, include a plinth that supports the aircraft seat of the aircraft seat unit, and also secures the aircraft seat unit to the floor of the aircraft cabin. In order that sufficient support is provided to the aircraft seat, and also to ensure a suitable connection with the floor of the aircraft cabin, the plinths are often heavy and take up a significant amount of space. The present invention seeks to mitigate the above-mentioned problems. Alternatively or additionally, the present invention seeks to provide an improved base unit for an aircraft seat unit which may be lighter weight than prior art base units, and/or may provide more storage space than prior art base units.

US 2003/222174 A1 discloses an example of an aircraft luggage locker disposed in a compartment under a seat cushion which pivots about a horizontal axis. US 2021/114735 A1 discloses a seat unit structure, a seat unit, and an attachment method thereof in which component reinstallation does not arise when the seat unit is attached in an aircraft.

### Summary of the Invention

The present invention provides, according to a first aspect, a base unit for an aircraft seat unit, the base unit comprising:
a frame comprising at least one elongate member;
a plurality of panels comprising a seat connection panel and a base panel;
wherein the frame and the seat connection panel are mechanically connected to one another, such that the frame and the seat connection panel define a support section to provide a mounting structure for an aircraft seat; and wherein
the frame, the seat connection panel, and the base panel define a storage space underneath the support section which is approximately cuboidal and accessible to a user of the aircraft seat unit from a front and/or rear side of the base unit.

Advantageously, the invention provides a base unit for an aircraft seat unit which may be lighter than conventional plinths. Also, the base unit is configured such that a storage space is defined within the base unit, which may be used by a passenger to store a bag or other luggage that would otherwise need placing in an overhead locker. As such, the present invention may be used to provide more in-cabin storage for passengers, or may allow over-head lockers to be removed from aircraft cabin, potentially providing a more spacious feeling cabin.

The mechanical connection between the frame and the panel may be any suitable mechanical connection as would be well known by the person skilled in the art, including but not being limited to mechanical fasteners, welding, adhesive or interlocking interfaces.

The at least one elongate member may comprise a metal material, for example aluminium. The at least one elongate member may be extruded. The at least one elongate member may comprise a hollow tube. The at least one elongate member may have a circular, U-shaped, square, rectangular, or semi-circular cross-section. The at least one elongate member may have a cross-section that varies depending on the expected loads on individual points of the elongate member. The at least one elongate member may vary in thickness depending on the expected loads on individual points of the elongate member. The at least one elongate member may have a constant or varied cross section with local reinforcement positioned depending on the expected loads on individual points of the elongate member.

The frame may comprise a first elongate member and second elongate member. The first elongate member may be mechanically attached to the second elongate member by the panel. The panel may comprise a honeycomb structure, for example a metallic, for example aluminium, honeycomb structure. The honeycomb structure may increase the structural rigidity of the panel compared to a panel which does not comprise a honeycomb structure. The honeycomb structure may be an advantageous way to increase the structural rigidity of the panel without significantly increasing the weight of the panel. The panel may comprise aluminium, or other metal, or fibre glass, or carbon fibre, or other fibre. The panel may comprise a composite material, for example a honeycomb composite panel or other material as "Nomex <RTM>" for example. The panel may be perforated in order to save weight and/or increase passenger comfort by creating an acoustic resonator network for absorbing some cabin noise waves.

The elongate member may be a single piece of material shaped to provide an approximately rectangular aperture. Alternatively the elongate member may comprise a plurality of components, for example straight rods and curved corner connectors, joined together to provide an approximately rectangular aperture. The elongate member may comprise reinforcement at points where loading will be particularly high. The elongate member may comprise one or more connection points to facilitate mechanical engagement with the panel.

The base unit comprises a plurality of panels, for example a first side panel, a second side panel, and a base panel. The base unit comprises a seat connection panel. The base unit may comprise a panel located to provide a shelf or support level within the storage space.

The base unit may comprise one or more connection points, the connection points configured to enable an aircraft seat to be connected to the base unit. The connection points may additionally or alternatively be configured to enable a shell or shroud to be connected to the base unit. The base unit may comprise one or more connection points configured to enable the connection of a seat belt or seat belt mounting points. The base unit may comprise one or more connection points configured to enable the connection of the base unit to a floor of an aircraft cabin, for example utilising the conventional mounting points and/or mounting rails provided in many aircraft cabins. The connection points may be located on a seat connection panel spaced above the bottom of the base unit. The seat connection panel may also function as a shelf or support panel which acts to define the storage space within the base unit. The panel may be interchangeable, for example allowing panels with different configurations of connection points to be used depending on the connection points on the seat unit which is to be connected to the base unit.

The base unit may comprise bracing configured to further increase the structural rigidity and/or strength of the base unit. The bracing may be connected to the at least one elongate member and/or the panel or panels. The bracing may provide one or more connection points configured to enable an aircraft seat to be connected to the base unit. Provision of the connection points directly on the bracing may increase the strength and/or structural rigidity of the aircraft seat to base unit connection.

The base unit may comprise a console panel mounted to an upper portion of the base unit. The console panel may further increase the structural rigidity and/or strength of the base unit. The console panel may be configured to provide an armrest and/or table, and/or storage options for a passenger.

The base unit may comprise one or more fascias or screens to hide structural elements of the base unit from a passenger. The screen or screens may be removable for improving ease of installation of the base unit, and/or to allow for maintenance of the base unit. The screen or screens may be removable and replaceable with alternative screens, for example to change the visual appearance of the base unit. The screen or screens may comprise a decorative film without perforation, or perforated in order to improve sound transparency.

The base unit may comprise a panel of perforated metal, for example perforated aluminium, the panel positioned to further improve the structural rigidity and/or strength of the base unit.

According to a second aspect of the invention, there is provided an aircraft seat unit, the aircraft seat unit comprising a base unit according to the first aspect of the invention, and an aircraft seat mounted to the base unit. The bracing and/or seat connection panel described with reference to the first aspect of the invention may support the seat mechanism or support directly a seat cushion of the aircraft seat. The base unit may comprise one or more connection points located on a seat connection panel and/or bracing, and the aircraft seat may be connected to the connection points. The aircraft seat may comprise a cushion, the cushion being directly connected to the one or more connection points located on the seat connection panel and/or bracing. The aircraft seat may further comprise a shell or shroud mounted to the base unit. The shell or shroud may increase the privacy of a passenger using the aircraft seat unit.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a schematic view of a base unit according to a first embodiment of the invention;
- Figure 2: shows the base unit of figure 1, with all components removed other than the elongate members;
- Figure 3: shows the base unit of figure 1 with the console panel removed;
- Figure 4: shows the base unit of figure 1 with the console panel removed and various bracing members shown;
- Figure 5: shows an aircraft seat unit comprising a base unit as shown in figure 1.

### Detailed Description

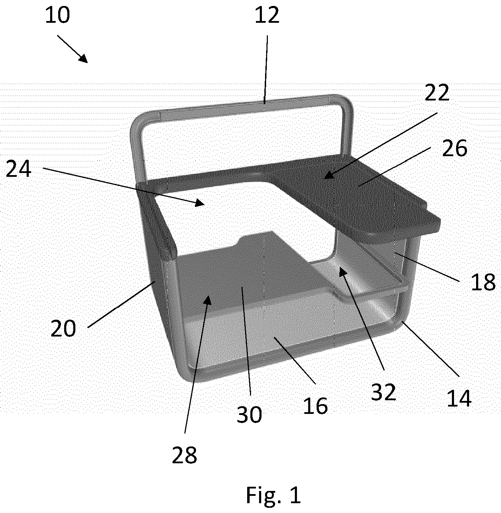

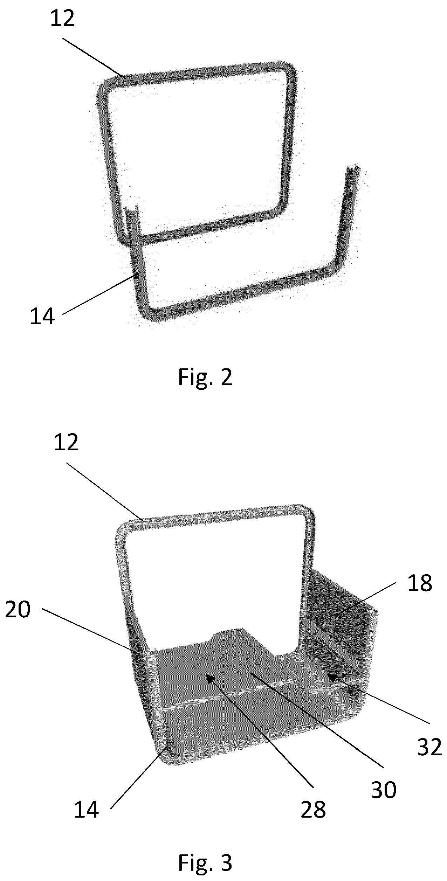

Figure 1 shows a base unit 10 for an aircraft seat unit. The base unit comprises a frame with a first elongate member 12 and a second elongate member 14. The first elongate member 12 is an extruded aluminium tube with a circular cross-section, shaped into an approximately rectangular shape. The second elongate member 14 is an extruded aluminium tube with a circular cross-section, shaped into an open topped U shape. This is best shown in figure 2, where other elements of the base unit 10 have been removed. In this embodiment, the first elongate member 12 comprises four straight sections secured into four curved corner sections. The second elongate member 14 comprises three straight sections secured into two curved corner sections. The first elongate member 12 and second elongate member 14 extend in parallel planes, spaced apart from one another. The first elongate member 12 is located at what is considered the back of the base unit 10, and the second elongate member 14 is located at what is considered the front of the base unit 10. A base panel 16 comprising an aluminium honeycomb construction is located at the base of the base unit 10, and connects the first elongate member 12 to the second elongate member 14. A left side panel 18 comprising an aluminium honeycomb construction is located to the left side of the base unit 10 and connects the first elongate member 12 to the second elongate member 14. A right side panel 20 comprising an aluminium honeycomb construction is located to the right side of the base unit 10 and connects the first elongate member 12 to the second elongate member 14. The left side and right side are determined with reference to the direction in which a passenger will be facing when sitting in the seat connected to the base unit 10, which will be forwards with respect to the front of the base unit 10. A console panel 22 is connected towards the top of the base unit 10, including an open section 24 which is configured to allow a seat to be joined to the base unit and provide space for a passenger to sit in the seat, and a side section 26 which acts both as an armrest for a passenger and also a small table for supporting drinks, snacks, and other items as chosen by the passenger. A seat connection panel 28 is provided midway up the base unit 10, with a support section 30 configured to provide connection points for a seat, and an open section 32 configured to allow a passenger in a seat unit behind the base unit 10 to place their feet. The open section 32 is located approximately underneath the side section 26 in order to effectively utilise the free space under the side section 26, in particular the increased height available for a passenger to rest their feet. There is an approximately cuboidal free space underneath the support section 30 and the base panel 16, which may be accessed either from the front or rear of the base unit 10, and into which a passenger may slide a suitably sized suitcase. In an alternative embodiment, the free space may include a barrier located towards either the first elongate member 12 or second elongate member 14, the barrier restricting access to the free space from one or other side of the base unit. This may improve the security luggage stored in the free space during flight.

Figure 3 shows the base unit 10 with the console panel 22 removed in order to provide a better view of the internal space within the base unit 10.

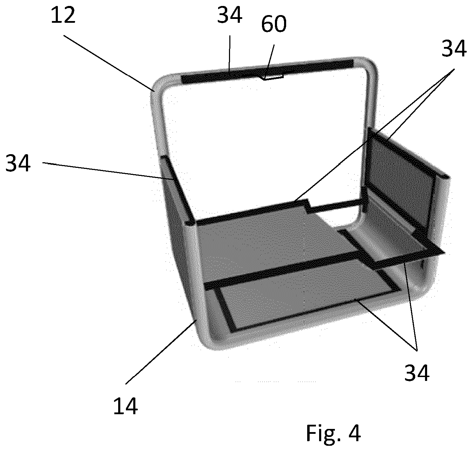

Figure 4 shows where various braces 34 are added, connecting various elements of the base unit 10 together, and further increasing the structural rigidity and strength of the base unit 10. The brace 34 added to the member 12 may help to support the third seat belt point load In this case, an additional part 60 for guiding the safety belt can be added in the form of a bent wire welded to the reinforcement 34 for example.

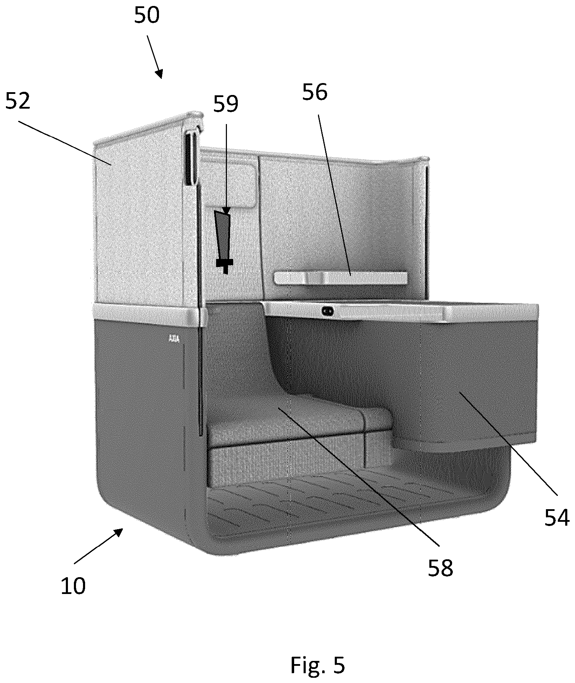

Figure 5 shows an aircraft seat unit 50, which includes a base unit 10 as described above. A shell 52 is mounted to the top part of the base unit 10 and extends around the seating area of a passenger in order to give them increased privacy. A console shell 54 is provided underneath the side section 26 of the console panel 22, screening off the space underneath the side section 26 to allow a passenger sitting behind the seat unit 50 to place their feet within the free space without encroaching on the space of a passenger sitting in the seat unit 50. A small shelf 56 extends from the shell 52 and may be used by a passenger to store small personal items. A seat 58 is mounted to the support portion 30 of the shelf panel 28. Various fascias have been attached to the base unit 10 in order to screen off the internal structure of the base unit 10. This improves the visual appearance of the base unit 10 and also protects the internal structure from damage. A third seat belt 59 is also shown in figure 5.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the embodiments described above, the frame and the panels have been constructed of several individual components joined together. In an alternative embodiment, the elongate members may be single components extruded or otherwise formed, bent, and potentially welded or bonded into position. In a further alternative embodiment the panels may be curved or otherwise shaped to reduce the number of separate components needed. For example, the front panel, right panel, and left panel, may all be formed from a single sheet of material cut and bent into the right shape. In an alternative embodiment, the elongate member 12 may be connected to a perforated metal panel which extends upwards from the elongate member 12, the perforated metal panel acting as a support for a shell extending around the aircraft seat unit. In an alternative embodiment, the right panel and/or left panel may include a slot, the slot configured to house a sliding door which may be moved out of the slot in order to increase passenger privacy once they are using the aircraft seat unit.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A base unit (10) for an aircraft seat unit, the base unit (10) comprising:
a frame comprising at least one elongate member (12, 14);
a plurality of panels (16, 18, 20, 22, 28) comprising a seat connection panel (28) and a base panel (16);
wherein the frame and the seat connection panel (28) are mechanically connected to one another, such that the frame and the seat connection panel (28) define a support section (30) to provide a mounting structure for an aircraft seat; and wherein
the frame, the seat connection panel (28) and the base panel (16) define a storage space underneath the support section (30) which is approximately cuboidal and **characterized in that** said storage space is accessible to a user of the aircraft seat unit from a front and/or rear side of the base unit (10).

2. A base unit (10) as claimed in claim 1, wherein the at least one elongate member (12, 14) comprises a metal material.

3. A base unit (10) as claimed in claim 1 or claim 2, wherein the at least one elongate member (12, 14) is extruded.

4. A base unit (10) as claimed in any preceding claim, wherein the frame comprises a first elongate member (12) and second elongate member (14).

5. A base unit (10) as claimed in claim 4, wherein the first elongate member (12) is mechanically attached to the second elongate member (14) by at least one of the panels (16, 18, 20, 22, 28).

6. A base unit (10) as claimed in any preceding claim, wherein at least one of the panels (16, 18, 20, 22, 28) comprises a honeycomb structure.

7. A base unit (10) as claimed in any preceding claim, further comprising one or more connection points, the connection points configured to enable an aircraft seat to be connected to the base unit (10).

8. A base unit (10) as claimed in any preceding claim, further comprising bracing (34) configured to further increase the structural rigidity and/or strength of the base unit.

9. A base unit (10) as claimed in any preceding claim, comprising one or more connection points being located on a seat connection panel and/or bracing (34), the connection points configured to enable an aircraft seat to be connected to the base unit (10).

10. A base unit (10) as claimed in any preceding claim, further comprising a console panel (22) mounted to an upper portion of the base unit (10) the console panel (22) configured to provide an armrest and/or table, and/or storage options for a passenger.

11. A base unit (10) as claimed in any preceding claim, further comprising one or more screens to hide structural elements of the base unit from a passenger.

12. An aircraft seat unit (50), the aircraft seat unit (50) comprising a base unit (10) according to claim 1, and an aircraft seat (58) mounted to the base unit (10).

13. An aircraft seat unit (50) according to claim 12, wherein the base unit (10) comprises one or more connection points located on a seat connection panel (28) and/or bracing (34), and the aircraft seat (58) is connected to the connection points.

## Patentansprüche

1. Basiseinheit (10) für eine Flugzeugsitzeinheit, wobei die Basiseinheit (10) umfasst:
einen Rahmen, der mindestens ein längliches Element (12, 14) umfasst;
eine Vielzahl von Platten (16, 18, 20, 22, 28), umfassend eine Sitzverbindungsplatte (28) und eine Basisplatte (16);
wobei der Rahmen und die Sitzverbindungsplatte (28) mechanisch miteinander verbunden sind, so dass der Rahmen und die Sitzverbindungsplatte (28) einen Stützbereich (30) bilden, um eine Befestigungsstruktur für einen Flugzeugsitz zu schaffen; und wobei
der Rahmen, die Sitzverbindungsplatte (28) und die Bodenplatte (16) einen Stauraum unterhalb des Stützbereichs (30) bilden, der annähernd quaderförmig ist, und dadurch charakterisiert ist, dass der Stauraum für einen Nutzer der FlugzeugsitzEinheit von einer Vorder- und/oder Rückseite der Basiseinheit (10) aus zugänglich ist.

2. Basiseinheit (10) nach Anspruch 1, wobei das mindestens eine längliche Element (12, 14) ein metallisches Material umfasst.

3. Basiseinheit (10) nach Anspruch 1 oder Anspruch 2, wobei das mindestens eine längliche Element (12, 14) extrudiert ist.

4. Basiseinheit (10) nach einem der vorhergehenden Ansprüche, wobei der Rahmen ein erstes längliches Element (12) und ein zweites längliches Element (14) umfasst.

5. Basiseinheit (10) nach Anspruch 4, wobei das erste längliche Element (12) durch mindestens eine der Platten (16, 18, 20, 22, 28) mechanisch mit dem zweiten länglichen Element (14) verbunden ist.

6. Basiseinheit (10) nach einem der vorhergehenden Ansprüche, wobei mindestens eine der Platten (16, 18, 20, 22, 28) eine Wabenstruktur umfasst.

7. Basiseinheit (10) nach einem der vorhergehenden Ansprüche, die ferner einen oder mehrere Verbindungspunkte umfasst, wobei die Verbindungspunkte so konfiguriert sind, dass ein Flugzeugsitz mit der Basiseinheit (10) verbunden werden kann.

8. Basiseinheit (10) nach einem der vorhergehenden Ansprüche, die ferner eine Aussteifung (34) umfasst, die so konstruiert ist, dass die strukturelle Steifigkeit und/oder Festigkeit der Basiseinheit weiter erhöht wird.

9. Basiseinheit (10) nach einem der vorhergehenden Ansprüche, die einen oder mehrere Verbindungspunkte umfasst, die sich an einer Sitzverbindungsplatte und/oder Aussteifung (34) befinden, wobei die Verbindungspunkte so konstruiert sind, dass ein Flugzeugsitz mit der Basiseinheit (10) verbunden werden kann.

10. Basiseinheit (10) nach einem der vorhergehenden Ansprüche, die ferner eine an einem oberen Abschnitt der Basiseinheit (10) angebrachte Konsolenplatte (22) umfasst, wobei die Konsolenplatte (22) so konstruiert ist, dass sie eine Armlehne und/oder einen Tisch und/oder Stauraummöglichkeiten für einen Passagier bietet.

11. Basiseinheit (10) nach einem der vorhergehenden Ansprüche, die ferner eine oder mehrere Blenden umfasst, um Strukturelemente der Basiseinheit vor einem Passagier zu verbergen.

12. Flugzeugsitzeinheit (50), wobei die Flugzeugsitzeinheit (50) eine Basiseinheit (10) gemäß Anspruch 1 und einen an der Basiseinheit (10) befestigten Flugzeugsitz (58) umfasst.

13. Flugzeugsitzeinheit (50) nach Anspruch 12, wobei die Basiseinheit (10) einen oder mehrere Verbindungspunkte umfasst, die sich an einer Sitzverbindungsplatte (28) und/oder einer Aussteifung (34) befinden, und der Flugzeugsitz (58) mit den Verbindungspunkten verbunden ist.

## Revendications

1. Une unité de base (10) pour une unité de siège d'aéronef, l'unité de base (10) comprenant :
- un cadre comprenant au moins un élément allongé (12, 14) ;
- une pluralité de panneaux (16, 18, 20, 22, 28) comprenant un panneau de connexion de siège (28) et un panneau de base (16) ;
dans laquelle le cadre et le panneau de connexion de siège (28) sont mécaniquement connectés l'un à l'autre, de sorte que le cadre et le panneau de connexion de siège (28) définissent une section de support (30) pour fournir une structure de montage pour un siège d'aéronef ; et dans laquelle le cadre, le panneau de connexion de siège (28) et le panneau de base (16) définissent un espace de stockage sous la section de support (30) qui est approximativement cuboïde et
**caractérisée en ce que** ledit espace de stockage est accessible à un utilisateur de l'unité de siège d'aéronef depuis un côté avant et/ou arrière de l'unité de base (10).

2. Une unité de base (10) selon la revendication 1, dans laquelle l'au moins un élément allongé (12, 14) comprend un matériau métallique.

3. Une unité de base (10) selon la revendication 1 ou la revendication 2, dans laquelle l'au moins un élément allongé (12, 14) est extrudé.

4. Une unité de base (10) selon l'une quelconque des revendications précédentes, dans laquelle le cadre comprend un premier élément allongé (12) et un second élément allongé (14).

5. Une unité de base (10) selon la revendication 4, dans laquelle le premier élément allongé (12) est fixé mécaniquement au second élément allongé (14) par au moins l'un des panneaux (16, 18, 20, 22, 28).

6. Une unité de base (10) selon l'une quelconque des revendications précédentes, dans laquelle au moins l'un des 30 panneaux (16, 18, 20, 22, 28) comprend une structure en nid d'abeilles.

7. Une unité de base (10) selon l'une quelconque des revendications précédentes, comprenant en outre un ou plusieurs points de connexion, les points de connexion étant configurés pour permettre à un siège d'aéronef d'être connecté à l'unité de base (10).

8. Une unité de base (10) selon l'une quelconque des revendications précédentes, comprenant en outre un contreventement (34) configuré pour augmenter davantage la rigidité structurelle et/ou la résistance de la base unité.

9. Une unité de base (10) selon l'une quelconque des revendications précédentes, comprenant un ou plusieurs 10 points de connexion étant situés sur un panneau de connexion de siège et/ou un contreventement (34), les points de connexion étant configurés pour permettre à un siège d'aéronef d'être connecté à l'unité de base (10).

10. Une unité de base (10) selon l'une quelconque des revendications précédentes, comprenant en outre un 15 panneau de console (22) monté sur une partie supérieure de l'unité de base (10) le panneau de console (22) étant configuré pour fournir un accoudoir et/ou une table, et/ou des options de stockage pour un passager.

11. Une unité de base (10) selon l'une quelconque des revendications précédentes, comprenant en outre un ou plusieurs écrans pour masquer des éléments structurels de l'unité de base à un passager.

12. Une unité de siège d'aéronef (50), l'unité de siège d'aéronef (50) comprenant une unité de base (10) selon la revendication 1, et un siège d'aéronef (58) monté sur l'unité de base (10).

13. Une unité de siège d'aéronef (50) selon la revendication 12, dans laquelle l'unité de base (10) comprend un ou plusieurs points de connexion situés sur un panneau de connexion de siège (28) et/ou un contreventement (34), et le siège d'aéronef (58) est connecté aux points de connexion.
